# FASCICULE DE BREVET EUROPEEN

(11) **EP 3 395 469 B1**
(45) Date de publication et mention de la délivrance du brevet: **13.11.2019**
(21) Numéro de dépôt: 18169442.3
(22) Date de dépôt: 26.04.2018
(51) Int. Cl.: B29K 91/00, B29C 45/36, F01D 5/14, B22C 9/10, B22C 7/02, B22C 21/14, B29C 67/24

(54) **ENSEMBLE POUR LA FABRICATION D'UNE AUBE DE TURBOMACHINE**
ANORDNUNG FÜR DIE HERSTELLUNG EINER LAUFRADSCHAUFEL EINES TURBOTRIEBWERKS
ASSEMBLY FOR MANUFACTURING A TURBINE ENGINE BLADE

(30) Priorité: 28.04.2017 FR 1753820
(43) Date de publication de la demande: 31.10.2018
(73) Titulaire: SAFRAN AIRCRAFT ENGINES, 75015 Paris (FR); Safran, 75015 Paris (FR)
(72) Inventeur: HANNY, Jean-Claude, Marcel, Auguste, 77550 MOISSY-CRAMAYEL (FR); GOMEZ, Pascal, Francis, Patrick, 77550 MOISSY-CRAMAYEL (FR); QUACH, Daniel, 77550 MOISSY-CRAMAYEL (FR); ROLLINGER, Adrien, Bernard, Vincent, 77550 MOISSY-CRAMAYEL (FR); TAMI LIZUZU, Joseph, Toussaint, 77550 MOISSY-CRAMAYEL (FR); VOLLEBREGT, Matthieu, Jean, Luc, 77550 MOISSY-CRAMAYEL (FR)
(74) Mandataire: Jolly, Christophe

(56) Documents cités:
- US-A1- 2013 333 855

## Description

La présente invention concerne un procédé de détermination de la position d'un noyau dans un moule d'injection, en particulier un moule d'injection de cire. Ce procédé est destiné à la fabrication de pièces pour turbomachines, telles que des aubes de turbine.

Classiquement, la technique de fonderie à cire perdue consiste en premier lieu à réaliser un modèle en cire, ou en tout autre matériau facilement éliminable par la suite, de la pièce à réaliser ; ce modèle comprend une pièce interne formant un noyau en céramique qui figure les cavités que l'on souhaite voir apparaitre à l'intérieur de l'aubage. Le modèle en cire est ensuite trempé plusieurs fois dans des barbotines constituées d'une suspension de particules céramiques pour confectionner, par des opérations dite de stucage et de séchage, un moule carapace.

On procède ensuite au décirage de la cire que l'on élimine du moule carapace, qui est une opération par laquelle on élimine de la carapace la cire ou le matériau constituant le modèle d'origine. Après cette élimination, on obtient un moule céramique dont la cavité reproduit toutes les formes de l'aube et qui renferme encore le noyau céramique destiné à générer les cavités internes de celle-ci. Le moule subit ensuite un traitement thermique, c'est-à-dire une « cuisson » à haute température qui lui confère les propriétés mécaniques nécessaires.

Le moule carapace est alors prêt pour la fabrication de la pièce métallique par coulée. Après contrôle de l'intégrité interne et externe du moule carapace, l'étape suivante consiste à couler un métal en fusion, qui vient occuper les vides entre la paroi intérieure du moule carapace et le noyau, puis à le solidifier. Dans le domaine de la fonderie à cire perdue, on distingue actuellement plusieurs techniques de solidification, donc plusieurs techniques de coulée, selon la nature de l'alliage et les propriétés attendues de la pièce résultant de la coulée. Il peut s'agir de solidification dirigée à structure colonnaire (DS), de solidification dirigée à structure monocristalline (SX) ou de solidification équiaxe (EX).

Après la coulée de l'alliage, on casse la carapace par une opération de décochage. Au cours d'une autre étape, on élimine chimiquement le noyau céramique qui est resté enfermé dans l'aube obtenue. L'aube métallique obtenue subit ensuite des opérations de parachèvement qui permettent d'obtenir la pièce finie.

Des exemples de réalisation d'aubes de turbine par la technique de fonderie à la cire perdue sont donnés dans les demandes de brevets FR2875425 et FR2874186 de la demanderesse.

Pour former le modèle en cire de l'aube on utilise un outillage, ou moule d'injection cire, dans lequel on place le noyau puis on injecte la cire liquide par un canal prévu à cet effet.

Il convient de placer ce noyau de façon extrêmement précise dans le moule d'injection car tout décalage dans son positionnement se traduira par des non conformités de l'épaisseur des parois de l'aube et du positionnement des cavités internes de l'aube dont la forme est celle du noyau. Le métal de l'aube étant soumis à des températures très importantes, ces défauts se traduiraient par des durées de vie de l'aube fortement réduites. Il convient donc de garantir avec une grande précision la place qu'occupe le noyau dans le moule. Pour cela, les moules d'injection de cire actuellement utilisés comportent des moyens de support du noyau de façon statique, ces moyens de support pouvant comprendre des tiges dont les extrémités forment des points d'appui pour soutenir le noyau dans le moule.

Si ce type de positionnement du noyau s'avère efficace, il présente néanmoins des limites lorsque le noyau est réalisé en plusieurs éléments disjoints/indépendants assemblés les uns aux autres dans le moule. En effet, le positionnement relatif ainsi que le maintien des différents éléments du noyau doit être réalisé avec précision sans impacter le modèle cire dont il est rappelé qu'il formera après coulée l'aube.

Le document US2013/0333855 concerne un procédé d'injection à la cire perdue pour la fabrication de pièces mécaniques.

L'invention a notamment pour but d'apporter une solution simple, efficace et économique aux problèmes de l'art antérieur décrit précédemment.

A cet effet, elle propose un ensemble pour la réalisation d'un moulage en cire d'une aube de turbomachine comprenant un moule d'injection de cire dans lequel un noyau est apte à venir se monter dans une position prédéterminée de moulage, le noyau s'étendant selon une direction longitudinale entre un pied et une tête, caractérisé en ce que le noyau comprend un élément principal et au moins un premier élément secondaire comportant chacun au moins une partie fonctionnelle et une partie non fonctionnelle, la partie non fonctionnelle du premier élément secondaire comprenant une portion de tige s'étendant dans une direction longitudinale de l'aube et logée dans une première encoche de la partie non fonctionnelle de l'élément principal, le moule d'injection cire comprenant un premier bossage interne venant serrer ladite portion de tige dans le fond de la première encoche.

Selon l'invention, les deux éléments du noyau sont maintenus ensemble par un serrage d'une portion de tige du premier élément secondaire du noyau dans une encoche ou gorge longitudinale de l'élément principal du noyau. Ce montage autorise également les dilatations thermiques longitudinales du premier élément secondaire par rapport à l'élément principal, ce qui permet de limiter les déformations des deux éléments l'un par rapport à l'autre et augmente la précision des aubes réalisées avec l'ensemble selon l'invention. Egalement, l'utilisation de parties non fonctionnelles des éléments de noyaux évite de modifier les parties fonctionnelles du noyau. En effet, le dimensionnement de ces parties fonctionnelles est délicat à réaliser et une modification de leurs formes pour des raisons autres que celles en relation avec la forme finale de l'aube n'est pas souhaitable.

Le terme « fonctionnelle » utilisé en référence au noyau permet d'indiquer si la pièce ainsi qualifiée permet de réaliser une face de la géométrie finale de l'aube, c'est-à-dire une face externe telle qu'une face d'intrados ou d'extrados, par exemple, ou une face interne délimitant le circuit de refroidissement de l'aube. Ainsi, une partie non fonctionnelle fait référence à une zone d'un élément du noyau qui n'a pas d'impact sur la géométrie finale de la pièce.

En pratique, la direction longitudinale correspond également à une direction s'étendant depuis le pied de l'aube jusqu'au sommet de l'aube, cette direction longitudinale étant sensiblement perpendiculaire à l'axe de rotation de la turbomachine.

Selon une autre caractéristique de l'invention, le noyau comprend un second élément secondaire dont la partie non fonctionnelle comprend également une portion de tige s'étendant dans la direction longitudinale de l'aube et logée dans une seconde encoche de la partie non fonctionnelle de l'élément principal, le moule comprenant un second bossage interne venant serrer ladite portion de tige dans le fond de la seconde encoche.

De préférence, les portions de tige, les première et seconde encoches et les premier et second bossages sont symétriques l'un de l'autre par rapport une droite s'étendant longitudinalement.

Dans une réalisation de l'invention, le ou les bossages comprennent au moins deux flancs longitudinaux convergeant l'un vers l'autre avec une inclinaison de ces flancs facilitant d'une part le démoulage après injection cire des modèles cire entourant les noyaux d'autre part facilitant les opérations de décochage de la carapace après coulée du métal.

Les flancs peuvent être sont inclinés en oblique d'un angle compris entre 10 et 30° par rapport à un plan contenant la direction longitudinale et une direction perpendiculaire à la direction longitudinale et passant entre les deux flancs.

Les deux flancs de chaque bossage peuvent être symétriques l'un de l'autre par rapport audit plan.

Dans une réalisation de l'invention, le ou les bossages recouvrent intégralement la ou les encoches.

L'invention sera mieux comprise et d'autres détails, avantages et caractéristiques de l'invention apparaîtront à la lecture de la description suivante faite à titre d'exemple non limitatif, en référence aux figures suivantes :
- la figure 1 est une vue schématique en perspective d'une extrémité inférieure d'un noyau ;
- la figure 2 est une vue schématique en coupe selon la ligne de coupe AA de la figure 1, le noyau étant monté dans un moule d'injection de cire ;
- la figure 3 est une vue schématique en coupe selon la ligne de coupe AA de la figure 1, le noyau étant entouré par une carapace en céramique et la cire ayant été retirée.

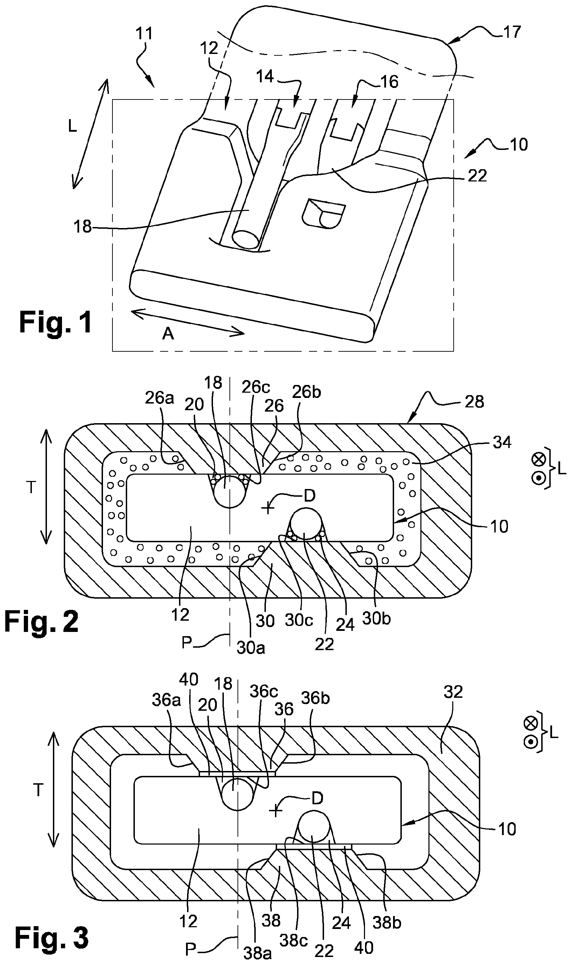

On se réfère tout d'abord à la figure 1 représentant une extrémité inférieure ou pied d'un noyau 10 comprenant un élément principal 12 et deux éléments secondaire, à savoir un premier élément secondaire 14 et un second élément secondaire 16. Sur la figure 1, seules sont représentées les parties non fonctionnelles des éléments constitutifs du noyau 10, ces parties non fonctionnelles étant agencées à une extrémité longitudinale du noyau 10 (double flèche L). Comme indiqué précédemment, une partie non fonctionnelle du noyau 10 est une partie ne participant pas à la géométrie finale de la pièce lors du processus de fonderie à la cire perdue.

Le noyau 10 s'étend selon trois directions perpendiculaires deux à deux, une direction longitudinale L correspondant sur l'aube finale à la direction longitudinale L reliant le pied au sommet de l'aube, une direction axiale A (figure 1) correspondant sur l'aube finale à la direction amont/aval et une direction transverse T traversant les faces d'intrados et d'extrados de l'aube (figure 2). Le noyau comprend une tête 17 sur la figure 1 et un pied 11 qui est seul représenté sur la figure 1.

Comme cela est bien visible le premier élément secondaire 14 comprend dans sa partie non fonctionnelle une portion de tige 18 s'étendant sensiblement longitudinalement et qui est logée dans une première encoche 20 ou gorge sensiblement longitudinale de la partie non fonctionnelle de l'élément principal 12 (figures 1 et 2). De même, le second élément secondaire 16 comprend dans sa partie non fonctionnelle une portion de tige 22 s'étendant sensiblement longitudinalement et qui est logée dans une seconde encoche 24 ou gorge sensiblement longitudinale de la partie non fonctionnelle de l'élément principal 12 (figures 1 et 2). L'invention couvre également les réalisations dans lesquelles le l'élément principal 12 du noyau 10 ne comprend qu'une seule encoche.

L'élément principal 12 du noyau 10 est destiné à former dans sa partie fonctionnelle (non représentée) une cavité centrale de l'aube et les premier et second éléments secondaires 14, 16 sont destinés à former dans leurs parties fonctionnelles (non représentées) des cavités dont la fonction est de refroidir les parois intrados et extrados de l'aube.

Les portions de tige 18, 22 sont agencées de part et d'autre de la partie non fonctionnelle de l'élément principal 12, les première et seconde encoches 20, 24 débouchant ainsi dans des sens opposés d'une direction sensiblement perpendiculaire (double flèche T sur la figure 2) à la direction longitudinale L.

Comme représenté en figure 2, le moule d'injection de la cire comprend un premier bossage 26 interne formé sur une face interne du moule 28 et positionnée de manière à serrer la portion de tige 18 du premier élément secondaire 14 du noyau 10 dans la première encoche 20 de l'élément principal 12 du noyau 10. De manière similaire, le moule 28 comprend un second bossage 30 interne formé sur une face interne du moule 28 et positionnée de manière à serrer la portion de tige 22 du second élément secondaire 16 du noyau 10 dans la seconde encoche 24 de l'élément principal 12 du noyau 10. On remarque que les premier 26 et second 30 bossages sont ainsi formés sur des faces en vis-à-vis du moule 28 et recouvre les débouchés des première 20 et seconde 24 encoches.

Chaque bossage 26, 30 comprend deux flancs longitudinaux 26a, 26b, 30a, 30b inclinés en oblique l'un par rapport à l'autre, convergeant l'un vers l'autre vers l'intérieur du moule 28 et reliés l'un à l'autre par une paroi 26c, 30c de serrage d'une portion de tige 18, 22, d'un élément secondaire 14, 16 du noyau 10 dans le fond de l'encoche 20, 24. De préférence, les flancs 26a, 26b, 30a, 30b sont inclinés d'un angle compris entre 10 et 30° par rapport à un plan contenant la direction longitudinale L et la direction perpendiculaire T à la direction longitudinale L et passant entre les deux flancs 26a, 26b, 30a, 30b.

La figure 3 représente le noyau 10 maintenu dans un moule carapace 32 céramique. En effet, après que la cire 34 a été injectée dans le moule représenté en figure 2, le modèle d'aube en cire comprenant le noyau 10 est recouvert de céramique. On comprend ainsi que la formation de bossages 26, 30 dans le moule d'injection de cire permet de former des bossages 36, 38 similaires sur la carapace 32 céramique et ayant des flancs inclinés 36a, 36b, 38a, 38b et une face d'appui 36c, 38c identiques aux flancs 26a, 26b, 30a, 30b et à la face d'appui 26c, 30c des bossages 26, 30 du moule 28 d'injection de cire. Ainsi, la carapace permet de maintenir l'assemblage des trois éléments 12, 14, 16 du noyau dans une partie non fonctionnelle de celui-ci, ce qui évite de modifier la forme de la partie fonctionnelle du noyau 10. La coopération de portions de tige longitudinales 18, 22 des premier et second éléments secondaires 14, 16 du noyau 10 dans des encoches longitudinales 20, 24 de l'élément principal 12 du noyau 10 autorise les dilatations thermiques longitudinales des éléments les uns par rapport aux autres.

Les encoches 20, 24 comprennent un fond à section sensiblement circulaire correspondant à la section circulaire des portions de tige. Bien évidemment, d'autres formes seraient également possible sans sortir du cadre de l'invention.

Une pellicule de vernis 40 peut être interposée entre la tige 18, 22 de chacune de la partie non fonctionnelle du premier élément secondaire 14 et de la partie non fonctionnelle du second élément secondaire 16 et la paroi 38c du bossage 38 en regard. On comprend que lors de l'opération de décirage et de cuisson du moule carapace, la pellicule de vernis sera éliminée donnant lieu à la formation d'un espace libre formant un jeu entre chacun du premier élément secondaire 14 et du second élément secondaire 22 et le moule carapace 32. Cet espace libre forme un moyen de maintien glissant des secondes parties non fonctionnelles des premier 14 et second 16 élément secondaires. La pellicule de vernis permet de compenser les dilatations, différentielles ces deux pièces, ceci lors des cycles de chauffage du moule carapace puis coulée.

## Revendications

1. Ensemble pour la réalisation d'un moulage en cire d'une aube de turbomachine comprenant un moule (28) d'injection de cire dans lequel un noyau (10) est apte à venir se monter dans une position prédéterminée de moulage, le noyau (10) s'étendant selon une direction longitudinale (L) entre un pied et une tête **caractérisé en ce que** le noyau comprend un élément principal (12) et au moins un premier élément secondaire (14) comportant chacun au moins une partie fonctionnelle et une partie non fonctionnelle, la partie non fonctionnelle du premier élément secondaire (14) comprenant une portion de tige (18) s'étendant dans la direction longitudinale (L) du noyau et logée dans une première encoche (20) de la partie non fonctionnelle de l'élément principal (12), le moule (28) comprenant un premier bossage (26) interne venant serrer ladite portion de tige (18) dans le fond de la première encoche (20).

2. Ensemble selon la revendication 1, **caractérisé en ce que** le noyau (10) comprend un second élément secondaire (16) dont la partie non fonctionnelle comprend également une portion de tige (22) s'étendant dans la direction longitudinale (L) et logée dans une seconde encoche (24) de la partie non fonctionnelle de l'élément principal (12), le moule (28) comprenant un second bossage (30) interne venant serrer ladite portion de tige (22) dans le fond de la seconde encoche (24).

3. Ensemble selon la revendication 2, **caractérisé en ce que** les portions de tige (18, 22), les première et seconde encoches (20, 24) et les premier et second bossages (26, 30) sont symétriques l'un de l'autre par rapport une droite (D) s'étendant longitudinalement (L).

4. Ensemble selon l'une des revendications 1 à 3, **caractérisé en ce que** le ou les bossages (26, 30) comprennent au moins deux flancs (26a, 26b, 30a, 30b) longitudinaux convergeant l'un vers l'autre vers l'intérieur du moule (28).

5. Ensemble selon la revendication 4, **caractérisé en ce que** les flancs (26a, 26b, 30a, 30b) sont inclinés en oblique d'un angle compris entre 10 et 30° par rapport à un plan (P) contenant la direction longitudinale (L) et une direction perpendiculaire (T) à la direction longitudinale (L) et passant entre les deux flancs (26a, 26b, 30a, 30b).

6. Ensemble selon la revendication 5, **caractérisé en ce que** les deux flancs (26a, 26b, 30a, 30b) de chaque bossage (26, 30) sont symétriques l'un de l'autre par rapport audit plan (P).

7. Ensemble selon l'une des revendications 1 à 6, **caractérisé en ce que** le ou les bossages (26, 30) recouvrent la ou les encoches (20, 24) en contact avec ladite portion de tige du second élément secondaire dans une direction perpendiculaire (T) à la direction longitudinale (L).

## Patentansprüche

1. Anordnung zur Herstellung eines Wachsabgusses einer Turbomaschinenschaufel, welche eine Form (28) zum Einspritzen von Wachs umfasst, in der ein Kern (10) in einer vorab festgelegten Formungsposition montiert werden kann, wobei sich der Kern (10) in einer Längsrichtung (L) zwischen einem Fuß und einem Kopf erstreckt, **dadurch gekennzeichnet, dass** der Kern ein Hauptelement (12) und zumindest ein erstes sekundäres Element (14) umfasst, das zumindest einen funktionellen Teil und einen nicht funktionellen Teil umfasst, wobei der nicht funktionelle Teil des ersten sekundären Elements (14) einen Stangenabschnitt (18) umfasst, der sich in der Längsrichtung (L) des Kerns erstreckt und in einer ersten Aussparung (20) des nicht funktionellen Teils des Hauptelements (12) aufgenommen ist, wobei die Form (28) eine erste innere Erhöhung (26) umfasst, die besagten Stangenabschnitt (18) in den Boden der ersten Aussparung (20) presst.

2. Anordnung nach Anspruch 1, **dadurch gekennzeichnet, dass** der Kern (10) ein zweites sekundäres Element (16) umfasst, dessen nicht funktioneller Teil ebenfalls einen Stangenabschnitt (22) umfasst, der sich in der Längsrichtung (L) erstreckt und in einer zweiten Aussparung (24) des nicht funktionellen Teils des Hauptelements (12) aufgenommen ist, wobei die Form (28) eine zweite innere Erhöhung (30) umfasst, die den Stangenabschnitt (22) in den Boden der zweiten Aussparung (24) presst.

3. Anordnung nach Anspruch 2, **dadurch gekennzeichnet, dass** die Stangenabschnitte (18, 22), die erste und die zweite Aussparung (20, 24) und die erste und die zweite Erhöhung (26, 30) in Bezug auf eine sich längs (L) erstreckende Gerade (D) symmetrisch zueinander sind.

4. Anordnung nach einem der Ansprüche 1 bis 3, **dadurch gekennzeichnet, dass** die Erhöhung(en) (26, 30) zumindest zwei längliche Flanken (26a, 26b, 30a, 30b) umfassen, die zum Innern der Form (28) hin zueinander konvergieren.

5. Anordnung nach Anspruch 4, **dadurch gekennzeichnet, dass** die Flanken (26a, 28b, 30a, 30b) in einem Winkel zwischen 10 und 30° in Bezug auf eine Ebene (P) mit einer Längsrichtung (L) und einer Richtung (T) senkrecht zur Längsrichtung (L) schräg abfallend sind und zwischen den beiden Flanken (26a, 26b, 30a, 30b) verlaufen.

6. Anordnung nach Anspruch 5, **dadurch gekennzeichnet, dass** die beiden Flanken (26a, 26b, 30a, 30b) jeder Erhöhung (26, 20) in Bezug auf die Ebene (P) symmetrisch sind.

7. Anordnung nach einem der Ansprüche 1 bis 6, **dadurch gekennzeichnet, dass** die Erhöhung(en) (26, 30) die Aussparung (en) (20, 24) in Kontakt mit dem Stangenabschnitt des zweiten sekundären Elements in einer Richtung (T) senkrecht zur Längsrichtung (L) bedecken.

## Claims

1. An assembly for manufacturing a wax moulding of a turbine engine blade comprising a wax injection mould (28) in which a core (10) can be mounted in a predetermined moulding position, the core (10) extending in a longitudinal direction (L) between a base and a head **characterized in that** the core comprises a main element (12) and at least a first secondary element (14) each with at least one functional part and a non-functional part, the non-functional part of the first secondary element (14) comprising a rod portion (18) extending in the longitudinal direction (L) of the core and housed in a first slot (20) of the non-functional part of the main element (12), the mould (28) comprising a first internal boss (26) for clamping said rod portion (18) at the bottom of the first slot (20).

2. An assembly according to Claim 1, **characterized in that** the core (10) comprises a second secondary element (16) whose non-functional part also comprises a rod portion (22) extending in the longitudinal direction (L) and housed in a second slot (24) of the non-functional part of the main element (12), the mould (28) comprising a second internal boss (30) clamping said rod portion (22) at the bottom of the second slot (24).

3. An assembly according to Claim 2, **characterized in that** the rod portions (18, 22), the first and second slots (20, 24) and the first and second bosses (26, 30) are symmetrical to each other in relation to a straight line (D) extending longitudinally (L).

4. An assembly according to one of Claims 1 to 3, **characterized in that** the boss(es) (26, 30) comprise at least two longitudinal flanks (26a, 26b, 30a, 30b) converging towards each another towards the inside of the mould (28).

5. An assembly according to Claim 4, **characterized in that** the flanks (26a, 26b, 30a, 30b) are inclined obliquely by an angle of between 10 and 30° in relation to a plane (P) containing the longitudinal direction (L) and a perpendicular direction (T) to the longitudinal direction (L) and passing between the two flanks (26a, 26b, 30a, 30b).

6. An assembly according to Claim 5, **characterized in that** the two flanks (26a, 26b, 30a, 30b) of each boss (26, 30) are symmetrical to each other with respect to said plane (P).

7. An assembly according to one of Claims 1 to 6, **characterized in that** the boss or bosses (26, 30) cover the slot(s) (20, 24) in contact with said rod portion of the second secondary element in a perpendicular direction (T) to the longitudinal direction (L).
